# EUROPÄISCHE PATENTSCHRIFT

(11) **EP 3 935 723 B1**
(45) Veröffentlichungstag und Bekanntmachung des Hinweises auf die Patenterteilung: **14.01.2026**
(21) Anmeldenummer: 20705886.8
(22) Anmeldetag: 14.02.2020
(51) Int. Cl.: H02M 1/12, H02M 1/44, H02M 5/458, H02M 7/48, H02P 27/06, H02P 29/50, G06F 13/40

(54) **ANTRIEBSSYSTEM, AUFWEISEND EINEN WANDLER UND EINEN WECHSELRICHTER ZUR SPEISUNG EINES ELEKTROMOTORS**
DRIVE SYSTEM COMPRISING A CONVERTER AND AN INVERTER FOR SUPPLYING AN ELECTRICAL MOTOR
SYSTÈME D'ENTRAÎNEMENT COMPRENANT UN CONVERTISSEUR ET UN ONDULEUR POUR ALIMENTER UN MOTEUR ÉLECTRIQUE

(30) Priorität: 08.03.2019 DE 102019001583
(43) Veröffentlichungstag der Anmeldung: 12.01.2022
(73) Patentinhaber: SEW-EURODRIVE GmbH & Co. KG, 76646 Bruchsal (DE)
(72) Erfinder: KOLLAR, Hans, Jürgen, 76646 Bruchsal (DE); STAMM, Walter, 68789 St. Leon-Rot (DE); STARK, Marcel, 74909 Meckesheim (DE)
(86) Internationale Anmeldenummer: PCT/EP2020/025069
(87) Internationale Veröffentlichungsnummer: WO 2020/182339

(56) Entgegenhaltungen:
- DE-A1- 10 303 710
- DE-A1- 102009 031 257
- DE-A1- 102010 007 275
- DE-A1- 102011 084 509
- DE-A1- 19 642 596
- JP-A- 2018 113 837

## Beschreibung

Die Erfindung betrifft ein Antriebssystem, aufweisend einen Wandler und einen Wechselrichter zur Speisung eines Elektromotors.

Es ist allgemein bekannt, dass ein generatorisch betriebener, von einem Wechselrichter gespeister Elektromotor elektrische Leistung zum gleichspannungsseitigen Anschluss des Wechselrichters hintreibt.

Aus der DE 10 2006 028 103 A1 **ist eine** unterbrechungsfreie Umschaltung zwischen sinusförmigem und blockförmigem netzseitigem Stromrichterbetrieb bekannt.

**Aus der** DE 196 42 596 A1 **ist als nächstliegender Stand der Technik ein Verfahren zur Kompensation von Blindstromanteilen mittels einer Kompensationseinrichtung mit einem Pulsstromrichter bekannt.**

**Aus der** DE 103 03 710 A1 **ist ein Verfahren zur Regelung eines selbstgeführten Netzstromrichters mit einem Gleichspannungsausgang bei Netzüberspannung bekannt.**

**Aus der** DE 10 2010 007275 A1 **ist ein Antriebssystem bekannt.**

**Aus der** DE 10 2011 084509 A1 **ist eine Schnittstellenschaltung bekannt.**

**Aus der** DE 10 2009 031257 A1 **ist ein Umrichter bekannt.**

**Aus der** JP 2018 113837 A **ist ein von einem Wechselrichter gespeister Elektromotor bekannt.**

Der Erfindung liegt daher die Aufgabe zugrunde, ein Antriebssystem, aufweisend einen Wandler und einen Wechselrichter zur Speisung eines Elektromotors, weiterzubilden, wobei eine erhöhte Sicherheit beim Betrieb erreichbar sein soll.

Erfindungsgemäß wird die Aufgabe bei dem Antriebssystem nach den in Anspruch 1 und bei dem Verfahren nach den in Anspruch **11** angegebenen Merkmalen gelöst.

**Von Vorteil ist dabei, dass automatisch erkannt wird, ob ein Filter vorhanden, also angebaut und elektrisch angeschlossen, und somit der sinusförmige Betrieb ausführbar ist oder ob kein Filter vorhanden ist, also das Netz über die Netzdrosseln direkt mit dem Wandler verbunden, also angeschlossen ist, und somit der blockförmige Betrieb ausgeführt werden muss.** Denn für die sinusförmige Rückspeisung ist die Stellerdrossel in der Regelstrecke notwendig, da ansonsten das zur Netzspannung phasensynchrone Rückspeisen nicht ausführbar ist. Der blockförmige Betrieb jedoch benötigt keine Stellerdrossel und auch kein Filter. Ein harter Betrieb am Netz ist durchführbar, wobei spannungsgesteuert das jeweils blockförmige Rückspeisen gestartet und stromabhängig beendet wird.

Der Wandler weist vorzugsweise ein eigenes Gehäuse auf, das separat ist von den Netzdrosseln oder eventuell vorhandener Stellerdrossel mit Filter. Beim Anschließen der zuletzt genannten Komponenten muss auch die zweite Signalleitung verbunden, also anschlossen werden.

Mit dem erfindungsgemäßen Antriebssystem ist ein untenstehend näher erläutertes Verfahren zum Betreiben des Antriebssystems ausführbar.

Bei einer vorteilhaften Ausgestaltung ist die zweite Signalleitung mittels eines Widerstands, insbesondere Pull-Up-Widerstands, mit einem festen Potential, insbesondere HIGH oder LOW, verbunden. Von Vorteil ist dabei, dass der Eingang des Sigma-Delta-Wandlers dauerhaft festes Potential aufweist und somit einfach erkennbar ist, dass die zweite Signalleitung offen endet, also kein Mittel zur Spannungserfassung am Filter angeordnet ist.

Bei einer vorteilhaften Ausgestaltung ist am wechselspanungsseitigen Anschluss des Wandlers ein schlanker Zwischenkreis angeordnet, insbesondere also kein kondensatorgestützter Zwischenkreis angeordnet,
und/oder
die am gleichspanungsseitigen Anschluss des Wandlers anliegende Kapazität, insbesondere kapazitiver Spannungsteiler, insbesondere kapazitiver Spannungsteiler aus nicht-polaren Kondensatoren, beträgt höchstens 2 µF oder höchstens 8 µF pro Kilowatt Nennleistung des Wechselrichters.

Von Vorteil ist also, dass ein schlanker Zwischenkreis verwendbar ist, also kein kondensatorgestützter Zwischenkreis. Somit sind Elektrolytkondensatoren und die damit verbundene niedrige Standzeit eines Elektrogeräts vermeidbar. Die geringe Kapazität am Zwischenkreis genügt somit nicht einmal zur Pufferung einer halben Netzperiode.

Bei einer vorteilhaften Ausgestaltung ist der Wandler ein AC/DC-Wandler, insbesondere wobei der Wandler ein rückspeisefähiger Gleichrichter ist. Von Vorteil ist dabei, dass von einer Ansteuerung pulsweitenmodulierte Ansteuersignal für die Halbleiterschalter des Wandlers ausreichen, um den Wandler als Stromsteller beim Rückspeisen zu verwenden. Dabei werden beim sinusförmigen Betrieb die Ansteuersignale derart erzeugt, dass der rückgespeiste Strom phasensynchron zur Netzspannung rückgespeist wird. Der Betrag des Stroms wird derart gestellt, dass die am gleichspannungsseitigen Anschluss des Wandlers erfasste Spannung auf einen Sollwert hin geregelt wird.

Bei einer vorteilhaften Ausgestaltung ist die Betriebsart entweder sinusförmige Rückspeisung oder blockförmige Rückspeisung, insbesondere abhängig vom Schaltzustand des Umschaltmittels. Von Vorteil ist dabei, dass der Schaltzustand des Umschaltmittels vom Erkennen des Vorhandenseins der Filter bestimmt ist. Insbesondere steuert die Signalelektronik die Halbleiterschalter des Wandlers derart an, dass bei blockförmiger Rückspeisung die am gleichspannungsseitigen Anschluss des Wandlers anliegende Spannung denjenigen Phasenanschluss des wechselspannungsseitigen Anschlusses des Wandlers, dessen Spannung geringer ist als die am gleichspannungsseitigen Anschluss des Wandlers anliegende Spannung, solange speist, bis der zugehörige mit einem Stromerfassungsmittel erfasste Phasenstrom dieses Phasenanschlusses verschwindet.

Somit ist beim blockförmigen Rückspeisebetrieb keine Stellerdrossel vorhanden. Außerdem ist auch kein Filter vorhanden. Es wird dann also spannungsabhängig Energie aus dem Gleichspannungszwischenkreis direkt der jeweiligen Phase, insbesondere also der der jeweiligen Phase zugeordneten Netzdrossel, zugeführt und dieses Zuführen stromabhängig beendet. Der blockförmige Betrieb ist also ein harter Betrieb am Netz, wobei nur die Netzdrossel zwischengeordnet ist zwischen dem Wandler und dem Netz.

Beim sinusförmigen Rückspeisebetrieb hingegen ist eine Stellerdrossel und ein Filter zwischen dem Wandler und der Netzdrossel vorhanden, so dass ein geregelter Betrieb ermöglicht ist.

Bei einer vorteilhaften Ausgestaltung vergleicht das Vergleichsmittel die mit einem digitalen 1-Bit-Datenstrom dargestellten Werte der jeweiligen Phasen der beiden erfassten Spannungen und weist unterhalb einer zulässigen Abweichung der beiden Werte voneinander einen ersten Zustand an seinem Ausgang auf und ansonsten einen anderen Zustand. Von Vorteil ist dabei, dass das Ausgangssignal somit den Schaltzustand des Umschaltmittels bestimmt.

Bei einer vorteilhaften Ausgestaltung stellt abhängig vom Ausgangssignal des Vergleichsmittels, wenn das Ausgangssignal während einer Mindestzeitdauer konstant bleibt, ein Umschaltmittel der Signalelektronik die Betriebsart der Ansteuerung der Halbleiterschalter des Wandlers ein. Von Vorteil ist dabei, dass das Erkennen des Filters sicher gewährleistbar ist.

Bei einer vorteilhaften Ausgestaltung ist der wechselspannungsseitige Anschluss des Wandlers über eine Netzdrossel mit dem Öffentlichen Wechselspannungsversorgungsnetz verbunden ist. Von Vorteil ist dabei, dass die Netzdrossel dreiphasig ausführbar ist, also in jeder Phasenleitung jeweils eine der Induktivitäten der Netzdrossel angeordnet ist.

Bei einer alternativen vorteilhaften Ausgestaltung ist der wechselspannungsseitige Anschluss des Wandlers über eine Stellerdrossel mit einem Filter verbunden, das mit einer Netzdrossel verbunden ist. Von Vorteil ist dabei, dass eine sinusförmige Rückspeisung ermöglicht ist, da die Stellerdrossel zwischen dem als Steller benutzten Wandler und der netzseitigen Spannungserfassung angeordnet ist und somit die Stellgröße die erfasste Größe nicht alleine bestimmt.

Bei einer vorteilhaften Ausgestaltung weist die Netzdrossel in jeder Phasenleitung eine Induktivität auf, wobei die Stellerdrossel in jeder Phasenleitung eine Induktivität aufweist,
wobei das Filter einen aus Kapazitäten gebildeten Sternpunkt aufweist, wobei jede der Kapazitäten mit ihrem jeweiligen ersten Anschluss mit dem Sternpunkt und mit dem jeweils anderen Anschluss mit einer jeweiligen Phasenleitung verbunden ist,
insbesondere wobei der gleichspannungsseitige Anschluss des Wandlers eine Reihenschaltung aus zwei weiteren Kapazitäten speist, wobei der Verbindungsknoten elektrisch mit dem Sternpunkt verbunden ist. Von Vorteil ist dabei, dass der Sternpunkt direkt oder über eine weitere Kapazität mit elektrisch Erde, also PE, verbindbar ist. Der Filter wirkt als Kurzschluss für hochfrequente Spannungsanteile in den Differenzspannungen der Phasenleitungen. Der Netzfilter unterdrückt in die Phasenleitungen eingekoppelte hochfrequente Spannungsanteile.

Bei einer vorteilhaften Ausgestaltung regelt bei der Betriebsart der sinusförmigen Rückspeisung ein Regler den am gleichspannungsseitigen Anschluss des Wandlers erfassten Spannungswert auf einen Sollwert hin, indem die Ansteuerung die Halbleiterschalter des Wandlers derart ansteuert, dass ein elektrischer Strom phasensynchron zur erfassten zweiten Spannung zur Stellerdrossel hin eingespeist, insbesondere rückgespeist, wird. Von Vorteil ist dabei, dass mittels der sinusförmigen Rückspeisung möglichst wenig Störung ins Öffentliche Wechselspannungsversorgungsnetz eingebracht wird.

Bei einer vorteilhaften Ausgestaltung ist das Ausgangssignal eines weiteren Vergleichsmittels der Signalelektronik abhängig von der Differenz der Drehrichtung der mit dem ersten Mittel erfassten Spannung und der Drehrichtung der mit dem zweiten Mittel erfassten Spannung. Von Vorteil ist dabei, dass ein Verdrahtungsfehler erkennbar ist.

Wichtige Merkmale bei dem Verfahren zum Betreiben eines Antriebssystems sind, dass das Antriebssystem einen Halbleiterschalter aufweisende Wandler, insbesondere AC/DC-Wandler, und einen Wechselrichter zur Speisung eines Elektromotors, der am wechselspannungsseitigen Anschluss des Wechselrichters elektrisch verbunden ist, aufweist,
wobei der gleichspannungsseitige Anschluss des Wechselrichters mit dem gleichspannungsseitigen Anschluss des Wandlers verbunden ist,
insbesondere wobei am wechselspannungsseitigen Anschluss des Wandler Phasenleitungen angeschlossen sind,
wobei den am wechselspanungsseitigen Anschluss des Wandlers anliegende Spannung, insbesondere drei Phasenspannungen aufweisende Drehspannung, insbesondere Spannungsraumzeiger, erfasst wird und mittels einer ersten, insbesondere mehradrigen, Signalleitung zu einem Eingang eines ersten Analog-Digital-Wandlers, insbesondere Sigma-Delta-Wandlers, einer Signalelektronik geleitet wird,
wobei mittels einer zweiten, insbesondere mehradrigen, Signalleitung eine an einem Filter anliegende Spannung, insbesondere Drehspannung, insbesondere Spannungsraumzeiger, zu einem Eingang eines zweiten Analog-Digital-Wandlers, insbesondere Sigma-Delta-Wandlers, der Signalelektronik leitbar ist,
wobei abhängig vom Vergleich des Ausgangsignals des ersten Analog-Digital-Wandlers mit dem Ausgangsignal des zweiten Analog-Digital-Wandlers die Betriebsart der Ansteuerung der Halbleiterschalter des Wandlers eingestellt wird,
insbesondere wobei jede der gegeneinander elektrisch isolierten Adern der zweiten Signalleitung mittels eines jeweiligen Widerstands, insbesondere Pull-Up-Widerstands, jeweils mit einem festen Potential, insbesondere HIGH oder LOW, verbunden ist. Von Vorteil ist dabei, dass abhängig vom Vorhandensein der Stellerdrossel die Betriebsart sinusförmig oder blockförmig eingestellt wird.

Bei einer vorteilhaften Ausgestaltung wird abhängig vom Vergleich der Drehrichtung der am Filter erfassten Spannung mit der Drehrichtung der am wechselspannungsseitigen Anschluss des Wandlers erfassten Spannung ein Fehlerzustand, insbesondere Verdrahtungsfehler, weitergemeldet und/oder angezeigt. Von Vorteil ist dabei, dass ein Verdrahtungsfehler erkennbar ist.

Bei einer vorteilhaften Ausgestaltung weist das Filter einen aus Kapazitäten gebildeten Sternpunkt auf, wobei jede der Kapazitäten mit ihrem jeweiligen ersten Anschluss mit dem Sternpunkt und mit dem jeweils anderen Anschluss mit einer jeweiligen Phasenleitung verbunden ist. Von Vorteil ist dabei, dass hochfrequente Differenzspannungen zwischen den Phasenleitungen unterdrückt und somit die erfassten Spannungen nur entsprechend langsam veränderlich sind.

Bei einer vorteilhaften Ausgestaltung ist die zweite Signalleitung mehradrig ausgeführt, insbesondere so dass eine jeweilige Ader der zweiten Signalleitung eine jeweilige Phasenspannung zum Eingang des zweiten Analog-Digital-Wandlers, insbesondere zu einem jeweiligen Kanal des mehrkanalig ausgeführten Analog-Digital-Wandlers, leitet. Von Vorteil ist dabei, dass als Wechselspannung eine Drehspannung verwendbar ist und somit nicht nur eine einzige Spannung, sondern eine Drehspannung, also eine dreikomponentige Raumzeigergröße, erfassbar ist.

Bei einer vorteilhaften Ausgestaltung ist die erste Signalleitung mehradrig ausgeführt, insbesondere so dass eine jeweilige Ader der ersten Signalleitung eine jeweilige Phasenspannung zum Eingang des ersten Analog-Digital-Wandlers, insbesondere zu einem jeweiligen Kanal des mehrkanalig ausgeführten ersten Analog-Digital-Wandlers, leitet. Von Vorteil ist dabei, dass als Wechselspannung eine Drehspannung verwendbar ist und somit nicht nur eine einzige Spannung, sondern eine Drehspannung, also eine dreikomponentige Raumzeigergröße, erfassbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

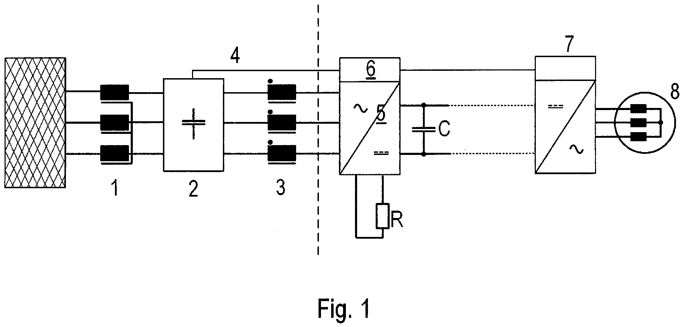

In der Figur 1 ist ein erfindungsgemäßes Antriebssystem in erster Betriebsart für sinusförmige Rückspeisung bei generatorischem Betrieb eines Elektromotors 8 dargestellt.

In der Figur 2 ist das erfindungsgemäße Antriebssystem in zweiter Betriebsart für blockförmige Rückspeisung bei generatorischem Betrieb des Elektromotors 8 dargestellt.

Wie in den Figuren dargestellt, wird der Elektromotor 8, insbesondere ein Drehstrommotor, von einem Wechselrichter 7 gespeist, der eine Steuerelektronik aufweist, welche pulsweitenmodulierte Ansteuersignale für steuerbare Halbleiterschalter des Wechselrichters erzeugt, wobei der Wechselrichter eine Parallelschaltung von Halbbrücken aufweist, die aus einer Gleichspannung, insbesondere Zwischenkreisspannung, versorgt ist. Jede Halbbrücke ist als Reihenschaltung zweier steuerbarer Halbleiterschalter, insbesondere MOSFET-Schalter oder IGBT-Schalter, aufgebaut, wobei jedem dieser Halbleiterschalter jeweils eine Freilaufdiode parallel zugeschaltet ist.

Somit ist im motorischen Betrieb des Elektromotors 8 vom Wechselrichter 7 dem Elektromotor 8 eine Drehspannung zur Verfügung stellbar.

Im generatorischen Betrieb des Elektromotors 8 wird elektrische Leistung vom Elektromotor 8 über den Wechselrichter 7, insbesondere über dessen Freilaufdioden, in den Zwischenkreis, also an den gleichspannungsseitigen Anschluss des Wechselrichters gefördert.

Am gleichspannungsseitigen Anschluss ist eine Kapazität C zur Glättung zumindest hochfrequenter Spannungsschwankungen angeordnet. Außerdem ist ein gleichspannungsseitiger Anschluss eines Wandlers 5 der Kapazität und dem gleichspannugnsseitigen Anschluss des Wechselrichters parallelgeschaltet, so dass elektrische Leistung aus dem Zwischenkreis vom Wandler 5 in ein Öffentliches Wechselspannungsversorgungsnetz förderbar ist, das über eine Netzdrossel 1, ein Filter 2 und eine Stellerdrossel 3 mit dem wechselspannungsseitigen Anschluss des Wandlers 5 verbunden ist.

Der Wandler 5 ist dabei vorzugsweise als bidirektional betreibbarer AC/DC-Wandler ausgeführt. Insbesondere ist hierzu ein steuerbarer rückspeisefähiger Gleichrichter 5 geeignet.

Am Wandler 5, vorzugsweise am wechselspannungsseitigen Anschluss des Wandlers 5, wird die Spannung erfasst. Hierzu werden vorzugsweise die drei Phasenspannungen der am wechselspannungsseitigen Anschluss des Wandlers 5 anliegenden Drehspannung erfasst und analog über eine mehradrige erste Signalleitung an einen ersten Analog-Digital-Wandler geleitet, dessen digitaler, insbesondere 1-Bit breiter, Datenstrom an eine Auswerteeinheit der Signalelektronik geleitet wird, welche daraus den Betrag und die Richtung des zugehörigen Spannungsraumzeigers bestimmt.

Darüber hinaus wird am Filter 2 die Spannung erfasst. Auch hierbei werden vorzugsweise die drei Phasenspannungen der am Filter 2 anliegenden Drehspannung erfasst und analog über eine mehradrige zweite Signalleitung an einen zweiten Analog-Digital-Wandler geleitet, dessen digitaler, insbesondere 1-Bit breiter, Datenstrom an die Auswerteeinheit der Signalelektronik 4 geleitet wird, welche daraus den Betrag und die Richtung des zugehörigen Spannungsraumzeigers bestimmt.

Die Adern der mehradrigen Signalleitungen sind gegeneinander elektrisch isoliert und jeweils mittels eines jeweiligen Push-Up-Widerstandes mit dem Potential HIGH verbunden.

Die Differenz der beiden Spannungsraumzeiger, insbesondere die Differenz der Beträge der beiden Spannungsraumzeiger, wird der Steuerelektronik des Wechselrichters 7 zugeführt.

Das Filter 2 weist vorzugsweise drei Kapazitäten auf, wobei jede der Kapazitäten mit ihrem ersten Anschluss mit einem Sternpunkt verbunden ist und mit dem jeweiligen anderen Anschluss mit einer jeweiligen der Phasen der am Filter 2 anliegenden Drehspannung.

Das Filter 2 ist über eine dreiphasige Netzdrossel 1 mit dem Öffentlichen Wechselspannungsversorgungsnetz verbunden.

Mittels einer dreiphasigen Stellerdrossel 3 ist das Filter 2 mit dem Wandler 5 verbunden. Der Sternpunkt ist elektrisch leitend mit dem Verbindungsknoten zweier in Reihe geschalteten, insbesondere gleiche Kapazitätswerte aufweisenden Kapazitäten verbunden, wobei die so gebildete Reihenschaltung am gleichspannungsseitigen Ausgang des Wandlers 5 angeordnet ist, also parallel zur Kapazität C des Zwischenkreises.

Die Differenz fällt an der Stellerdrossel 3 ab. Somit ist bei generatorischem Betrieb eine sinusförmige Rückspeisung ermöglicht.

Dabei wird die Zwischenkreisspannung auf einen Sollwert hin geregelt, indem der vom Wandler 5 über die Stellerdrossel zum Filter 2 hin gestellte Strom phasensynchron zur am Filter 2 erfassten Spannung ausgeführt wird. Der Regler bestimmt also den Strom als Stellgröße derart, dass die Phase der am Filter 2 erfassten Spannung, insbesondere Drehspannung, gleicht und der Betrag des Stroms wird vom Regler derart gestellt, dass die Zwischenkreisspannung auf den Sollwert hin geregelt wird.

Der Strom wird gestellt, indem die steuerbaren Halbleiterschalter des Wandlers 5 entsprechend pulsweitenmoduliert angesteuert werden.

Vorzugsweise wird der zu stellende Strom einem Stromregler als Sollwert vorgegeben und der Istwert des Stroms auf diesen Sollwert hin geregelt, indem das Pulsweitenmodulationsverhältnis der Ansteuersignale der Halbleiterschalter des Wandlers 5 entsprechend vom Stromregler gestellt werden unter Berücksichtigung der Phasengleichheit zur am Filter 2 erfassten Spannung.

Der Istwert des Stroms ist entweder mittels Stromsensoren erfassbar oder bei bekannter Induktivität der Stellerdrossel aus der Differenz bestimmbar.

Infolge des Netzfilters 1 werden hochfrequente Störungen gehindert am Eindringen ins Öffentliche Versorgungsnetz. Insbesondere aber stellt das Filter 2 einen Kurzschluss für hochfrequente Störungen dar. Somit werden diese Störungen unterdrückt.

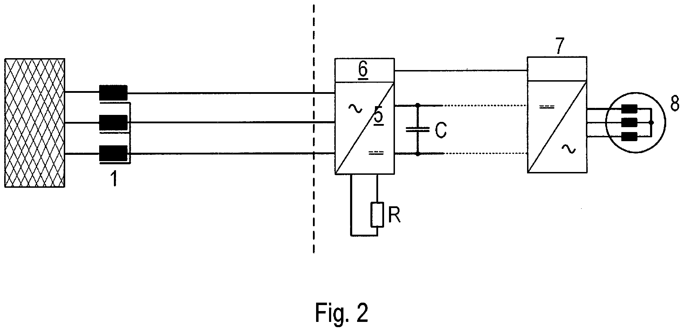

Wie in Figur 2 gezeigt, ist bei nicht vorhandener Stellerdrossel 3 und nicht vorhandenem Filter 2 nur eine blockförmige Rückspeisung ermöglicht.

Hierbei wird die an der Kapazität C anliegende Zwischenkreisspannung erfasst und bei Überschreiten eines Schwellwerts, insbesondere welcher der Spitzenspannung der am wechselspannungsseitigen Anschluss des Wandlers 5 anliegenden Spannung entspricht, elektrische Leistung durch Öffnen eines jeweiligen Halbleiterschalter des Wandlers 5 ins Öffentliche Wechselspannungsversorgungsnetz geleitet. Dabei wird stets derjenige Halbleiterschalter geöffnet, dessen zugehörige Phasenspannung kleiner ist als die Zwischenkreisspannung.

Die Halbleiterschalter des Wandlers 5 sind in parallel geschalteten Halbbrücken angeordnet, wobei diese Parallelschaltung aus der Zwischenkreisspannung versorgbar ist. Jede Halbbrücke ist aus einer Reihenschaltung von zwei Halbleiterschaltern gebildet, denen jeweils eine Freilaufdiode parallel zugeschaltet ist. Jede der Halbbrücken ist als Reihenschaltung von zwei der Halbleiterschalter ausgeführt, deren Verbindungsknoten mit einer jeweiligen der drei Phasenspannungen verbunden ist.

Zur Unterdrückung von Störungen ist das Netzfilter 1 eingangsseitig am Wandler 5 angeordnet.

Die Erfassung der Spannung am Filter 2, also der externen Spannung, wird unter Verwendung eines Delta-Sigma-Wandlers als zweiter Analog-Digital-Wandler ausgeführt. Wenn die drei Adern der Signalleitung 4 jeweils ein offenes Ende aufweisen, weil kein Filter 2 und keine Stellerdrossel 3 vorhanden ist, sondern die Netzdrossel 1 direkt mit dem Wandler 5 verbunden ist, steht am Ausgang des Delta-Sigma-Wandlers für jede der Phasen ein dauerhaftes Zustandssignal, insbesondere HIGH-Signal, an, weil ein jeweiliger Pull-Up Widerstand die jeweilige offene Ader der zweiten Signalleitung mit dem oberen Potential HIGH verbindet. Wenn dieses HIGH-Signal länger als eine kritische Zeitdauer ansteht, wird daraus geschlossen, dass die Netzdrossel 1 direkt am Wandler 5 anliegt und somit wird die blockförmige Rückspeisung als Betriebsart aktiviert.

Wenn jedoch für eine Mindestzeitspanne eine nicht verschwindende Differenz zwischen der am Filter 2 erfassten Spannung und der am Wandler 5 erfassten Spannung bestimmt wird, wird die sinusförmige Rückspeisung als Betriebsart aktiviert. Als nicht verschwindende Differenz wird hier das Überschreiten eines Schwellwerts verstanden. Wenn also der Betrag der Differenz der beiden Spannungen, insbesondere Drehspannungsraumzeiger, für die Zeitdauer der Mindestzeitspanne den Schwellwert überschreitet, wird die sinusförmige Rückspeisung als Betriebsrat aktiviert. Denn aus der nicht-verschwindenden Differenz wird geschlossen, dass die Stellerdrossel 3 und das Filter 2 vorhanden sind.

Außerdem wird die Drehrichtung des am Filter 2 erfassten Spannungsraumzeigers und die Drehrichtung des am Wandler 5 erfassten Spannungsraumzeigers bestimmt. Sind die beiden Drehrichtungen ungleich, liegt ein Verdrahtungsfehler vor. In diesem Fall wird ein Fehlerzustand angezeigt.

Erfindungsgemäß wird bei Inbetriebnahme oder beim Einschalten des Antriebssystems zunächst die Spannung an der Signalleitung 4 mit der am Wandler 5 erfassten Spannung verglichen, also die Differenz bestimmt.

Der Delta-Sigma-Wandler ist auch als Sigma-Delta -Wandler bezeichenbar.

Bei weiteren erfindungsgemäßen Ausführungsbeispielen ist statt HIGH alternativ LOW verwendet.

### Bezugszeichenliste

1 Netzdrossel
2 Filter
3 Stellerdrossel
4 Signalleitung zur Übertragung des am Filter 2, insbesondere extern, erfassten Spannungssignals
5 Wandler, insbesondere AC/DC-Wandler, insbesondere rückspeisefähiger Gleichrichter
6 Spannungserfassung am Wandler
7 Wechselrichter mit Steuerelektronik
8 Elektromotor, insbesondere Drehstrommotor
C Kapazität
R Bremswiderstand

## Patentansprüche

1. Antriebssystem, aufweisend
einen Elektromotor (8), der sowohl für motorischen als auch für generatorischen Betrieb eingerichtet ist,
einen bidirektional betreibbaren AC/DC-Wandler (5),
einen Wechselrichter (7) zur Speisung eines Elektromotors (8), der am wechselspannungsseitigen Anschluss des Wechselrichters (7) elektrisch verbunden ist, wobei der gleichspannungsseitige Anschluss des Wechselrichters (7) mit dem gleichspannungsseitigen Anschluss des AC/DC-Wandlers (5) verbunden ist,
eine Netzdrossel (1), ein Filter (2) und eine Stellerdrossel (3), wobei die Netzdrossel (1) eingangsseitig am AC/DC-Wandler (5) angeordnet ist, und das Filter (2) und die Stellerdrossel (3) entweder **zwischen** dem AC/DC-Wandler (5) und der Netzdrossel (1) vorhanden sind, so dass ein geregelter Betrieb ermöglicht ist, oder nicht vorhanden sind, so dass die Netzdrossel (1) mit dem AC/DC-Wandler (5) direkt verbunden ist,
eine Signalelektronik aufweisend eine Ansteuerung für Halbleiterschalter des AC/DC-Wandlers (5) und Vergleichsmittel zum Vergleichen von mit einem digitalen 1-bit-Datenstrom dargestellten Werte sowohl von drei Phasenspannungen einen am wechselspannungsseitigen Anschluss des AC/DC-Wandlers (5) anliegenden Drehspannung, als auch von drei Phasenspannungen einer **an der Netzdrossel (1)** anliegenden Drehspannung, welche jeweils mit Analog-Digital-Wandlern erfasst werden,
wobei die Signalelektronik weiterhin dazu eingerichtet ist, abhängig vom Ergebnis des Vergleichens die Betriebsart der Ansteuerung der Halbleiterschalter des AC/DC-Wandlers (5) einzustellen, und wenn eine betragsmäßige Differenz der beiden Drehspannungen einen Schwellwert überschreitet, wegen des Vorhandenseins des Filters (2) und der Stellerdrossel (3), eine sinusförmige Rückspeisung als Betriebsart zu aktivieren, und ansonsten, wegen des Nicht-Vorhandenseins des Filters (2) und der Stellerdrossel (3), eine blockförmige Rückspeisung als Betriebsart zu aktivieren.

2. Antriebssystem nach Anspruch 1,
**dadurch gekennzeichnet, dass**
die zweite Signalleitung (4) mittels eines Widerstands, insbesondere Pull-Down-Widerstands oder Pull-Up-Widerstands, mit einem festen Potential, insbesondere HIGH oder LOW, verbunden ist.

3. Antriebssystem nach einem der vorangegangenen Ansprüche,
**dadurch gekennzeichnet, dass**
am wechselspanungsseitigen Anschluss des Wandlers (5) ein schlanker Zwischenkreis angeordnet ist, insbesondere also kein kondensatorgestützter Zwischenkreis angeordnet ist,
und/oder dass
die am gleichspanungsseitigen Anschluss des Wandlers (5) anliegende Kapazität, insbesondere kapazitiver Spannungsteiler, insbesondere kapazitiver Spannungsteiler aus nicht-polaren Kondensatoren, höchstens 2 µF oder höchstens 8 µF pro Kilowatt Nennleistung des Wechselrichters (7) beträgt.

4. Antriebssystem nach einem der vorangegangenen Ansprüche,
**dadurch gekennzeichnet, dass**
**die Signalelektronik dazu ausgebildet ist, pulsweitenmodulierte Ansteuersignale für den AC/DC-Wandler (5) und den Wechselrichter (7) zu erzeugen.**

5. Antriebssystem nach einem der vorangegangenen Ansprüche,
**dadurch gekennzeichnet, dass**
bei blockförmiger Rückspeisung die am gleichspannungsseitigen Anschluss des Wandlers (5) anliegende Spannung denjenigen Phasenanschluss des wechselspannungsseitigen Anschlusses des Wandlers (5), dessen Spannung geringer ist als die am gleichspannungsseitigen Anschluss des Wandlers (5) anliegende Spannung, solange speist, bis der zugehörige mit einem Stromerfassungsmittel erfasste Phasenstrom dieses Phasenanschlusses verschwindet.

6. Antriebssystem nach einem der vorangegangenen Ansprüche,
**dadurch gekennzeichnet, dass**
abhängig vom Ausgangssignal des Vergleichsmittels, wenn das Ausgangssignal während einer Mindestzeitdauer konstant bleibt, dass Umschaltmittel der Signalelektronik die Betriebsart der Ansteuerung der Halbleiterschalter des Wandlers (5) einstellt.

7. Antriebssystem nach einem der vorangegangenen Ansprüche,
**dadurch gekennzeichnet, dass**
der wechselspannungsseitige Anschluss des Wandlers (5) über eine Netzdrossel (1), insbesondere Gleichtaktdrossel, mit dem Öffentlichen Wechselspannungsversorgungsnetz verbunden ist,
**insbesondere wobei die zweite Signalleitung (4) nicht verbunden ist mit, insbesondere also nicht angeschlossen an, dem Eingang des zweiten Analog-Digital-Wandlers (5),**
oder dass
der wechselspannungsseitige Anschluss des Wandlers (5) über eine Stellerdrossel (3) mit einem Filter (2) verbunden ist, das mit einer Netzdrossel (1) verbunden ist,
**insbesondere wobei die zweite Signalleitung (4) verbunden ist mit, insbesondere also angeschlossen an, dem Eingang des zweiten Analog-Digital-Wandlers (5).**

8. Antriebssystem nach einem der vorangegangenen Ansprüche,
**dadurch gekennzeichnet, dass**
die Netzdrossel (1) in jeder Phasenleitung eine Induktivität aufweist
wobei die Stellerdrossel (3) in jeder Phasenleitung eine Induktivität aufweist,
wobei das Filter (2) einen aus Kapazitäten, insbesondere X-Kondensatoren, des Filters (2) gebildeten Sternpunkt aufweist, wobei jede der Kapazitäten mit ihrem jeweiligen ersten Anschluss mit dem Sternpunkt und mit dem jeweils anderen Anschluss mit einer jeweiligen Phasenleitung verbunden ist,
insbesondere
- wobei der geichspannungsseitige Anschluss des Wandlers (5) eine Reihenschaltung aus zwei weiteren Kapazitäten speist, wobei der Verbindungsknoten elektrisch mit dem Sternpunkt verbunden ist
- und/oder wobei der geichspannungsseitige Anschluss des Wandlers (5) einen kapazitiven Spannungsteiler speist und die durch den kapazitiven Spannungsteiler erzeugte Teilspannung insbesondere direkt am Sternpunkt anliegt.

9. Antriebssystem nach einem der vorangegangenen Ansprüche,
**dadurch gekennzeichnet, dass**
bei der Betriebsart der sinusförmigen Rückspeisung ein Regler den am gleichspannungsseitigen Anschluss des Wandlers (5) erfassten Spannungswert auf einen Sollwert hin regelt, indem die Ansteuerung die Halbleiterschalter des Wandlers (5) derart ansteuert, dass ein elektrischer Strom phasensynchron zur erfassten zweiten Spannung zur Stellerdrossel (3) hin eingespeist, insbesondere rückgespeist, wird.

10. Antriebssystem nach einem der vorangegangenen Ansprüche,
**dadurch gekennzeichnet, dass**
das Ausgangssignal eines weiteren Vergleichsmittels der Signalelektronik abhängig von der Differenz der Drehrichtung der mit dem ersten Mittel erfassten Spannung und der Drehrichtung der mit dem zweiten Mittel erfassten Spannung ist.

11. Verfahren zum Betreiben eines Antriebssystems, nach einem der vorangegangenen Ansprüche,
wobei eine Überprüfung auf das Vorhandensein einer am wechselspannungsseitigen Anschluss des Wandlers (5) angeschlossenen Stellerdrossel (3) mit Filter (2) ausgeführt wird,
wobei zur Überprüfung die am wechselspanungsseitigen Anschluss des Wandlers (5) anliegende Spannung erfasst wird und verglichen wird mit der an einem Signalleitungs-Anschluss des Wandlers (5) anliegenden Spannung, welche bei angeschlossener Stellerdrossel (3) mit Filter (2) einer am Filter (2) anliegenden Spannung gleicht und bei nicht angeschlossener Stellerdrossel (3) mit Filter (2) einer Nullspannung gleicht,
wobei abhängig vom Ergebnis des Vergleichens die Betriebsart des Wandlers (5), insbesondere die Betriebsart der Ansteuerung der Halbleiterschalter des Wandlers (5), eingestellt wird,
wobei die Betriebsart entweder sinusförmige Rückspeisung oder blockförmige Rückspeisung ist,
insbesondere wobei bei blockförmiger Rückspeisung spannungsgesteuert die am gleichspannungsseitigen Anschluss des Wandlers (5) anliegende Spannung einer jeweiligen Phase des wechselspannungsseitigen Anschlusses des Wandlers (5) solange zugeführt wird, bis der in der Phase fließende Strom verschwindet.

12. Verfahren **nach Anspruch 11,**
wobei den am wechselspanungsseitigen Anschluss des Wandlers (5) anliegende Spannung, insbesondere drei Phasenspannungen aufweisende Drehspannung, insbesondere Spannungsraumzeiger, erfasst wird und mittels einer ersten, insbesondere mehradrigen, Signalleitung (4) zu einem Eingang eines ersten Analog-Digital-Wandlers, insbesondere Sigma-Delta-Wandlers, einer Signalelektronik geleitet wird,
wobei mittels einer zweiten, insbesondere mehradrigen, Signalleitung (4) eine an einem Filter (2) anliegende Spannung, insbesondere Drehspannung, insbesondere Spannungsraumzeiger, zu einem Eingang eines zweiten Analog-Digital-Wandlers, insbesondere Sigma-Delta-Wandlers, der Signalelektronik leitbar ist,
wobei abhängig vom Vergleich des Ausgangsignals des ersten Analog-Digital-Wandlers mit dem Ausgangsignal des zweiten Analog-Digital-Wandlers die Betriebsart der Ansteuerung der Halbleiterschalter des Wandlers (5) eingestellt wird.

13. Verfahren **nach Anspruch 11 oder 12,**
**dadurch gekennzeichnet, dass**
abhängig vom Vergleich der Drehrichtung der am Filter (2) erfassten Spannung mit der Drehrichtung der am wechselspannungsseitigen Anschluss des Wandlers (5) erfassten Spannung ein Fehlerzustand, insbesondere Verdrahtungsfehler, weitergemeldet und/oder angezeigt wird,
und/oder dass
das Filter (2) einen aus Kapazitäten gebildeten Sternpunkt aufweist, wobei jede der Kapazitäten mit ihrem jeweiligen ersten Anschluss mit dem Sternpunkt und mit dem jeweils anderen Anschluss mit einer jeweiligen Phasenleitung verbunden ist.

14. Verfahren nach einem der **Ansprüche 11 bis 13,**
**dadurch gekennzeichnet, dass**
die zweite Signalleitung (4) mehradrig ausgeführt ist, insbesondere so dass eine jeweilige Ader der zweiten Signalleitung (4) eine jeweilige Phasenspannung zum Eingang des zweiten Analog-Digital-Wandlers (5), insbesondere zu einem jeweiligen Kanal des mehrkanalig ausgeführten Analog-Digital-Wandlers (5), leitet,
und/oder dass
die erste Signalleitung (4) mehradrig ausgeführt ist, insbesondere so dass eine jeweilige Ader der ersten Signalleitung (4) eine jeweilige Phasenspannung zum Eingang des ersten Analog-Digital-Wandlers (5), insbesondere zu einem jeweiligen Kanal des mehrkanalig ausgeführten ersten Analog-Digital-Wandlers (5), leitet.

## Claims

1. Drive system, comprising
an electric motor (8) which is designed both for a motor mode and for a generator mode,
an AC/DC converter (5) which can be operated bidirectionally,
an inverter (7) for feeding an electric motor (8) that is electrically connected to the AC-side terminal of the inverter (7), wherein the DC-side terminal of the inverter (7) is connected to the DC-side terminal of the AC/DC converter (5),
a mains choke (1), a filter (2) and an adjuster choke (3), wherein the mains choke (1) is arranged on the input side of the AC/DC converter (5), and the filter (2) and the adjuster choke (3) either are present between the AC/DC converter (5) and the mains choke (1), so that controlled operation is possible, or are not present, so that the mains choke (1) is directly connected to the AC/DC converter (5),
signal electronics comprising an actuator for semiconductor switches of the AC/DC converter (5) and comparison means for comparing values, represented by a digital 1-bit data stream, both of three phase voltages of a three-phase voltage applied to the AC-side terminal of the AC/DC converter (5) and of three phase voltages of a three-phase voltage applied to the mains choke (1), each of these being detected by analog-to-digital converters,
wherein the signal electronics are additionally designed to set the mode of operation of the actuator of the semiconductor switches of the AC/DC converter (5) as a function of the result of the comparison, and, if a difference in magnitude of the two three-phase voltages exceeds a threshold value, to activate sinusoidal regeneration as the mode of operation on account of the presence of the filter (2) and the adjuster choke (3), and otherwise to activate block-shaped regeneration on account of the absence of the filter (2) and the adjuster choke (3).

2. Drive system according to claim 1,
**characterized in that**
the second signal line (4) is connected to a fixed potential, in particular HIGH or LOW, by means of a resistor, in particular a pull-down resistor or pull-up resistor.

3. Drive system according to any one of the preceding claims, **characterized in that**
a slim DC link is arranged at the AC-side terminal of the converter (5), i.e. in particular no capacitor-supported DC link is arranged there,
and/or **in that**
the capacitance applied to the DC-side terminal of the converter (5), in particular a capacitive voltage divider, in particular a capacitive voltage divider formed of non-polar capacitors, is at most 2 µF or at most 8 µF per kilowatt of rated power of the inverter (7).

4. Drive system according to any one of the preceding claims, **characterized in that**
the signal electronics are designed to generate pulse-width-modulated actuation signals for the AC/DC converter (5) and the inverter (7).

5. Drive system according to any one of the preceding claims, **characterized in that**,
in the case of block-shaped regeneration, the voltage applied to the DC-side terminal of the converter (5) feeds that phase terminal of the AC-side terminal of the converter (5) whose voltage is lower than the voltage applied to the DC-side terminal of the converter (5), until the associated phase current of this phase terminal, detected by a current detection means, disappears.

6. Drive system according to any one of the preceding claims, **characterized in that**
the switching means of the signal electronics sets the mode of operation of the actuator of the semiconductor switches of the converter (5) as a function of the output signal of the comparison means if the output signal remains constant for a minimum period of time.

7. Drive system according to any one of the preceding claims, **characterized in that**
the AC-side terminal of the converter (5) is connected to the public AC power supply network via a mains choke (1), in particular a common-mode choke,
in particular wherein the second signal line (4) is not connected to, i.e. in particular not attached to, the input of the second analog-to-digital converter (5),
or **in that**
the AC-side terminal of the converter (5) is connected via an adjuster choke (3) to a filter (2), which is connected to a mains choke (1),
in particular wherein the second signal line (4) is connected to, i.e. in particular attached to, the input of the second analog-to-digital converter (5).

8. Drive system according to any one of the preceding claims, **characterized in that**
the mains choke (1) in each phase line has an inductance, wherein the adjuster choke (3) in each phase line has an inductance,
wherein the filter (2) has a star point formed of capacitors, in particular X-capacitors, of the filter (2), wherein each of the capacitors is connected by its respective first terminal to the star point and by the respective other terminal to a respective phase line,
in particular
- wherein the DC-side terminal of the converter (5) feeds a series connection of two further capacitors, wherein the connecting node is electrically connected to the star point,
- and/or wherein the DC-side terminal of the converter (5) feeds a capacitive voltage divider, and the partial voltage generated by the capacitive voltage divider is applied to the star point, in particular directly.

9. Drive system according to any one of the preceding claims, **characterized in that**
in the sinusoidal regeneration mode of operation, a regulator regulates the voltage value detected at the DC-side terminal of the converter (5) to a setpoint value by the actuator actuating the semiconductor switches of the converter (5) in such a way that an electrical current is fed, in particular fed back, to the adjuster choke (3) in phase synchronization with the detected second voltage.

10. Drive system according to any one of the preceding claims, **characterized in that**
the output signal of a further comparison means of the signal electronics is dependent on the difference between the direction of rotation of the voltage detected by the first means and the direction of rotation of the voltage detected by the second means.

11. Method for operating a drive system according to any one of the preceding claims,
wherein a check is carried out for the presence of an adjuster choke (3) with a filter (2), which is connected to the AC-side terminal of the converter (5),
wherein, for the check, the voltage applied to the AC-side terminal of the converter (5) is detected and is compared with the voltage applied to a signal line terminal of the converter (5), which is equal to a voltage applied to the filter (2) when the control choke (3) with the filter (2) is connected and is equal to a zero voltage when the control choke (3) with the filter (2) is not connected, ,
wherein the mode of operation of the converter (5), in particular the mode of operation of the actuator of the semiconductor switches of the converter (5), is set as a function of the result of the comparison,
wherein the mode of operation is either sinusoidal regeneration or block-shaped regeneration,
in particular wherein, in the case of block-shaped regeneration, the voltage applied to the DC-side terminal of the converter (5) is supplied to a respective phase of the AC-side terminal of the converter (5) in a voltage-controlled manner until the current flowing in the phase disappears.

12. Method according to claim 11,
wherein the voltage applied to the AC-side terminal of the converter (5), in particular a three-phase voltage having three phase voltages, in particular a voltage space vector, is detected and is routed by means of a first, in particular multi-core, signal line (4) to an input of a first analog-to-digital converter, in particular a sigma-delta converter, of signal electronics,
wherein a voltage applied to a filter (2), in particular a three-phase voltage, in particular a voltage space vector, can be routed by means of a second, in particular multi-core, signal line (4) to an input of a second analog-to-digital converter, in particular a sigma-delta converter, of the signal electronics,
wherein the mode of operation of the actuator of the semiconductor switches of the converter (5) is set as a function of the comparison of the output signal of the first analog-to-digital converter with the output signal of the second analog-to-digital converter.

13. Method according to claim 11 or 12,
**characterized in that**
an error state, in particular a wiring error, is reported and/or displayed as a function of the comparison of the direction of rotation of the voltage detected at the filter (2) with the direction of rotation of the voltage detected at the AC-side terminal of the converter (5),
and/or **in that**
the filter (2) has a star point formed of capacitors, wherein each of the capacitors is connected by its respective first terminal to the star point and by the respective other terminal to a respective phase line.

14. Method according to any one of claims 11 to 13, **characterized in that**
the second signal line (4) is of multi-core configuration, in particular such that a respective core of the second signal line (4) routes a respective phase voltage to the input of the second analog-to-digital converter (5), in particular to a respective channel of the multi-channel analog-to-digital converter (5), and/or **in that**
the first signal line (4) is of multi-core configuration, in particular such that a respective core of the first signal line (4) routes a respective phase voltage to the input of the first analog-to-digital converter (5), in particular to a respective channel of the multi-channel first analog-to-digital converter (5).

## Revendications

1. Système d'entraînement, comprenant
un moteur électrique (8) conçu pour fonctionner tant en mode moteur qu'en mode générateur,
un convertisseur CA/CC bidirectionnel (5),
un onduleur (7) permettant d'alimenter un moteur électrique (8) qui est relié électriquement à la borne située côté tension alternative de l'onduleur (7),
la borne située côté tension continue de l'onduleur (7) étant reliée à la borne située côté tension continue du convertisseur CA/CC (5),
une self de lissage (1), un filtre (2) et une self de réglage (3), la self de lissage (1) étant agencée côté entrée au niveau du convertisseur CA/CC (5) et le filtre (2) et la self de réglage (3) étant présents entre le convertisseur CA/CC (5) et la self de lissage (1), de sorte qu'un fonctionnement régulé est possible, ou bien étant absents, de sorte que la self de lissage (1) est directement reliée au convertisseur CA/CC (5),
une électronique de signal comprenant une commande pour des commutateurs à semi-conducteurs du convertisseur CA/CC (5) et des moyens de comparaison permettant de comparer des valeurs, représentées par un flux numérique de données de 1 bit, tant de trois tensions de phase d'une tension triphasée appliquée à la borne située côté tension alternative du convertisseur CA/CC (5) que de trois tensions de phase d'une tension triphasée appliquée à la self de lissage (1), qui sont respectivement détectées par des convertisseurs analogique-numérique,
l'électronique de signal étant en outre conçue pour ajuster le mode de fonctionnement de la commande des commutateurs à semi-conducteurs du convertisseur CA/CC (5) en fonction du résultat de la comparaison, et pour, si une différence de montant des deux tensions triphasées dépasse une valeur de seuil, activer du fait de la présence du filtre (2) et de la self de réglage (3) une rétro-alimentation sinusoïdale en tant que mode de fonctionnement et, à défaut, activer du fait de l'absence du filtre (2) et de la self de réglage (3) une rétro-alimentation carrée en tant que mode de fonctionnement.

2. Dispositif d'entrainement selon la revendication 1,
**caractérisé en ce que**
la seconde ligne de signal (4) est reliée à un potentiel fixe, en particulier HAUT ou BAS, au moyen d'une résistance, en particulier d'une résistance de polarisation à la masse ou d'une résistance de polarisation à l'alimentation.

3. Système d'entraînement selon l'une quelconque des revendications précédentes, **caractérisé en ce que**
un circuit intermédiaire mince est agencé au niveau de la borne située côté tension alternative du convertisseur (5), en particulier **en ce qu'**aucun circuit intermédiaire assisté par condensateur n'est agencé,
et/ou **en ce que**
la capacité appliquée à la borne située côté tension continue du convertisseur (5), en particulier le diviseur de tension capacitif, en particulier le diviseur de tension capacitif constitué de condensateurs non polaires, ne dépasse pas 2 µF ou 8 µF par kilowatt de puissance nominale de l'onduleur (7).

4. Système d'entraînement selon l'une quelconque des revendications précédentes, **caractérisé en ce que**
l'électronique de signal est conçue pour générer des signaux de commande à modulation de largeur d'impulsion pour le convertisseur CA/CC (5) et l'onduleur (7).

5. Système d'entraînement selon l'une quelconque des revendications précédentes, **caractérisé en ce que**
en cas de rétro-alimentation carrée, la tension appliquée à la borne située côté tension continue du convertisseur (5) alimente la borne de phase de la borne située côté tension alternative du convertisseur (5) dont la tension est inférieure à la tension appliquée à la borne située côté tension continue du convertisseur (5) jusqu'à ce que le courant de phase, correspondant et détecté par un moyen de détection de courant, de ladite borne de phase disparaisse.

6. Système d'entraînement selon l'une quelconque des revendications précédentes, **caractérisé en ce que**
en fonction du signal de sortie du moyen de comparaison, si le signal de sortie reste constant pendant une durée minimale, le moyen de commutation de l'électronique de signal ajuste le mode de fonctionnement de la commande des commutateurs à semi-conducteurs du convertisseur (5).

7. Système d'entraînement selon l'une quelconque des revendications précédentes, **caractérisé en ce que**
la borne située côté tension alternative du convertisseur (5) est reliée au réseau public d'alimentation en tension alternative par l'intermédiaire d'une self de lissage (1), en particulier d'une self de mode commun,
la seconde ligne de signal (4) n'étant en particulier pas reliée, en particulier donc non raccordée, à l'entrée du second convertisseur analogique-numérique (5),
ou **en ce que**
la borne située côté tension alternative du convertisseur (5) est reliée par l'intermédiaire d'une self de réglage (3) à un filtre (2) relié à une self de lissage (1),
la seconde ligne de signal (4) étant en particulier reliée, en particulier donc raccordée, à l'entrée du second convertisseur analogique-numérique (5).

8. Système d'entraînement selon l'une quelconque des revendications précédentes, **caractérisé en ce que**
la self de lissage (1) présente une inductance dans chaque ligne de phase
la self de réglage (3) présentant une inductance dans chaque ligne de phase,
le filtre (2) présentant un point en étoile formé de capacités, en particulier de condensateurs de classe X, du filtre (2), chacune des capacités étant reliée par sa première borne respective au point en étoile et par l'autre borne respective à une ligne de phase respective,
en particulier
- la borne située côté tension continue du convertisseur (5) alimentant un montage en série constitué de deux autres capacités, le nœud de connexion étant relié électriquement au point en étoile
- et/ou la borne située côté tension continue du convertisseur (5) alimentant un diviseur de tension capacitif et la tension partielle générée par le diviseur de tension capacitif étant appliquée en particulier directement au point en étoile.

9. Système d'entraînement selon l'une quelconque des revendications précédentes, **caractérisé en ce que**
dans le mode de fonctionnement de rétro-alimentation sinusoïdale, un régulateur régule à une valeur de consigne la valeur de tension détectée au niveau de la borne située côté tension continue du convertisseur (5), par le fait que la commande commande les commutateurs à semi-conducteurs du convertisseur (5) de telle manière qu'un courant électrique en synchronisation de phase avec la seconde tension détectée est injecté, en particulier rétro-alimenté, vers la self de réglage (3).

10. Système d'entraînement selon l'une quelconque des revendications précédentes, **caractérisé en ce que**
le signal de sortie d'un autre moyen de comparaison de l'électronique de signal dépend de la différence entre le sens de rotation de la tension détectée par le premier moyen et le sens de rotation de la tension détectée par le second moyen.

11. Procédé de fonctionnement d'un système d'entraînement selon l'une quelconque des revendications précédentes, comprenant une étape consistant à
vérifier la présence d'une self de réglage (3) munie d'un filtre (2') et raccordée à la borne située côté tension alternative du convertisseur (5),
la tension appliquée à la borne située côté tension alternative du convertisseur (5) étant détectée en vue de ladite vérification et étant comparée à la tension appliquée à une borne de ligne de signal du convertisseur (5), qui correspond à une tension appliquée au filtre (2) lorsque la self de réglage (3) est raccordée au filtre (2), et qui correspond à une tension nulle lorsque la self de réglage (3) n'est pas raccordée au filtre (2),
le mode de fonctionnement du convertisseur (5), en particulier le mode de fonctionnement de la commande des commutateurs à semi-conducteurs du convertisseur (5), étant ajusté en fonction du résultat de la comparaison,
le mode de fonctionnement étant soit une rétro-alimentation sinusoïdale, soit une rétro-alimentation carrée,
la tension appliquée à la borne située côté tension continue du convertisseur (5) étant en particulier, dans le cas d'une rétro-alimentation carrée, fournie de manière commandée en tension à une phase respective de la borne située côté tension alternative du convertisseur (5) jusqu'à ce que le courant circulant dans la phase disparaisse.

12. Procédé selon la revendication 11,
la tension appliquée à la borne située côté tension alternative du convertisseur (5), en particulier la tension de rotation présentant trois tensions de phase, en particulier un vecteur de tension, étant détectée et dirigée au moyen d'une première ligne de signal (4), en particulier à plusieurs âmes, vers une entrée d'un premier convertisseur analogique-numérique, en particulier d'un convertisseur sigma-delta, d'une électronique de signal,
une tension appliquée à un filtre (2), en particulier une tension de rotation, en particulier un vecteur de tension, pouvant être divisée vers une entrée d'un second convertisseur analogique-numérique, en particulier un convertisseur sigma-delta, de l'électronique de signal au moyen d'une seconde ligne de signal (4), en particulier à plusieurs âmes, le mode de fonctionnement de la commande des commutateurs à semi-conducteurs du convertisseur (5) étant ajusté en fonction de la comparaison du signal de sortie du premier convertisseur analogique-numérique avec le signal de sortie du second convertisseur analogique-numérique.

13. Procédé selon la revendication 11 ou 12,
**caractérisé en ce que**
un état de défaillance, en particulier un défaut de câblage, est signalé et/ou affiché en fonction de la comparaison entre le sens de rotation de la tension détectée au niveau du filtre (2) et le sens de rotation de la tension détectée au niveau de la borne située côté tension alternative du convertisseur (5),
et/ou **en ce que**
le filtre (2) présente un point en étoile formé de capacités, chacune des capacités étant reliée par sa première borne respective au point en étoile et par l'autre borne respective à une ligne de phase respective.

14. Procédé selon l'une quelconque des revendications 11 à 13,
**caractérisé en ce que**
la seconde ligne de signal (4) est réalisée avec plusieurs âmes, en particulier de sorte qu'une âme respective de la seconde ligne de signal (4) conduit une tension de phase respective vers l'entrée du second convertisseur analogique-numérique (5), en particulier vers un canal respectif du convertisseur analogique-numérique (5) présentant plusieurs canaux,
et/ou **en ce que**
la première ligne de signal (4) est réalisée avec plusieurs âmes, en particulier de sorte qu'une âme respective de la première ligne de signal (4) conduit une tension de phase respective vers l'entrée du premier convertisseur analogique-numérique (5), en particulier vers un canal respectif du convertisseur analogique-numérique (5) présentant plusieurs canaux.
